**Europäisches Patentamt**

(19) **European Patent Office**

**Office européen des brevets**

(11) Publication number : **0 389 668 B1**

(12) # EUROPEAN PATENT SPECIFICATION

(45) Date of publication of patent specification :
28.10.92 Bulletin 92/44

(51) Int. Cl.⁵ : **B29D 30/24**

(21) Application number : **89111199.9**

(22) Date of filing : **20.06.89**

(54) **Tire building drum.**

(30) Priority : **29.03.89 CA 595061**

(43) Date of publication of application :
**03.10.90 Bulletin 90/40**

(45) Publication of the grant of the patent :
**28.10.92 Bulletin 92/44**

(84) Designated Contracting States :
**AT DE ES FR GB IT SE**

(56) References cited :
**US-A- 4 060 445**
**US-A- 4 090 909**

(73) Proprietor : **Gravenhurst Plastics Ltd.**
**P.O. Box 631**
**Gravenhurst Ontario, P0C 1G0 (CA)**

(72) Inventor : **Beard, George W.**
**980 Austin Street**
**Gravenhurst Ontario, P0C 1G0 (CA)**
Inventor : **Hamer, Frank**
**Lakeshore Drive**
**Gravenhurst P.O. Box 631 Ontario P0C 1G0**
**(CA)**

(74) Representative : **Wablat, Wolfgang, Dr.Dr.**
**Potsdamer Chaussee 48**
**W-1000 Berlin 38 (DE)**

## Description

The present invention relates to a building drum for tires and cylindrical articles having axially spaced beads therein.

Building drums for building tires are well known. Many types, styles, and arrangements are in common use, and even more are described in numerous patents. Some known building drums accommodate only one width, that is, provide no means for adjusting the axial face width of the drum to suit different spacings between the beads of a tire to be built thereon. Other building drums provide means for adjusting the axial face width to accommodate tires of differing axial widths between beads. The width adjustable building drums, however, require that some part or parts be moved axially relative to other parts of the drum and in consequence require an interruption of and time lost from the potential productivity of the building drum.

In addition to the above problems with tire building drums, other problems arose from the nature of the material out of which the tire building drum was made. Thus, if the drum were made of wood (to minimize the weight of the drum) splinters were formed which were detrimental to the tire being formed. If the drums were made of metal, e.g., steel instead of wood to solve the splinter problem, the drums were of excessive weight.

United States Patent Number 4,060,445 patented November 29, 1977 by S.J. Houck et al attempted to provide a solution to those problems by providing a tire building drum, free of axially movable parts for building tires and cylindrical articles having inextensible beads of given diameter therein but spaced axially any selected distance apart.

United States Patent Number 4,090,909 patented May 23, 1978 by C.E. Christie et al attempted to solve this problem by providing a rigid fixed diameter cylindrical drum for building a tire band, i.e., a straight cylindrical ply assembly without bead rings or other circumferentially-inextensible elements subsequently to be a part of a complete tire.

Thus the problems of providing a simple tire building drum to accommodate different widths of tires and yet be of strong but lightweight drum construction were solved by the use of membranes and the use of air flow means.

The present invention, on the other hand, solves the problem in an entirely different way. It solves the problem by forming the tire building drum of a rigid synthetic plastic material. The drum is hollow, but is provided with a central core adapted to be non-rotatably fixed to the rotating shaft of a conventional tire building machine. The central core is connected to the interior of the hollow drum by a plurality of radially-outwardly-extending ribs which extend along the longitudinal axis of the drum.

For example, the central core may be hollow, square-shaped. The ribs may include four ribs, one extending radially, perpendicularly-outwardly from a respective side wall of the square, and four diagonal ribs, each extending radially, diagonally-outwardly from each corner of the square.

Because the tire building drum is hollow, it is lightweight. Because it is formed with an internally-braced structure, it is strong. Because it is made of a synthetic plastic material, there is no problem of wooden splinters. Also, since it is inexpensive to manufacture, tire building drums of different widths can be inexpensively provided.

In the accompanying drawings:

Figure 1 is a cross-sectional view of the tire building drum of one aspect of this invention;

Figure 2 is a top plan view thereof; and

Figure 3 is a perspective view thereof.

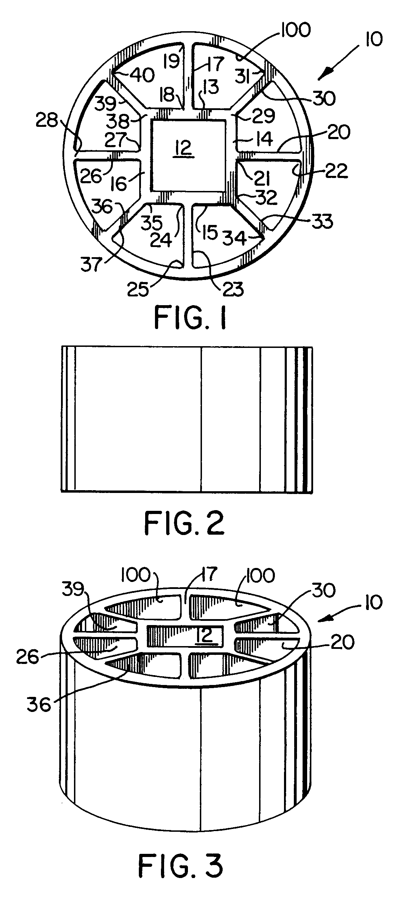

As seen in Figures 1 and 3, the tire building drum 10 is a generally hollow-cylindrical member. To enhance the utility of the drum 10 for its intended purpose, the drum 10 is preferably rigid. The drum 10 is made of a suitable synthetic plastic material, e.g., polyvinyl chloride, high density polyethylene, polypropylene, nylon, etc., of a sufficient thickness to be rigid.

The cross-sectional view of the tire building drum 10 shown in Figure 1 displays a central hollow square-shaped core 12. While the core 12 is shown to be square-shaped, it can be of any geometrical shape which can be non-rotationably associated with a rotatable shaft.

Square-shaped core 12 includes four longitudinally-extending walls 13, 14, 15 and 16. Extending outwardly from the centre of wall 13 is a rib 17, which extends from a reinforced area 18 at the wall 13 to a reinforced area 19 at the interior surface 100 of the tire building drum 10.

Extending radially, perpendicularly-outwardly from the centre of wall 14 is a rib 20, which extends from a reinforced area 21 at the wall 14 to a reinforced area 22 at the interior surface 100 of the tire building drum 10.

Extending radially, perpendicularly-outwardly from the centre of wall 15 is a rib 23, which extends from a reinforced area 24 at the wall 15 to a reinforced area 25 at the interior surface 100 of the tire building drum 10.

Extending radially, perpendicularly-outwardly from the centre of wall 16 is a rib 26, which extends from a reinforced area 27 at the wall 16 to a reinforced area 28 at the interior surface 100 of the tire building drum 10.

Extending radially, obliquely from a corner 29 at the intersection of walls 13 and 14, is a rib 30 which extends to a reinforced area 31 at the interior surface 100 of the tire building drum 10.

Extending radially, obliquely from a corner 32 at the intersection of walls 15 and 14, is a rib 33 which extends to a reinforced area 34 at the interior surface 100 of the tire building drum 10.

Extending radially, obliquely from a corner 35 at the intersection of walls 15 and 16, is a rib 36 which extends to a reinforced area 37 at the interior surface 100 of the tire building drum 10.

Extending radially, obliquely from a corner 38 at the intersection of walls 16 and 13, is a rib 39 which extends to a reinforced area 40 at the interior surface 100 of the tire building drum 10.

Thus, a light-weight but strong tire building drum 10 is provided which may, for example, have a diameter of about 15 cm and a length which varies from about 1/3 meter to about 2 meters.

## Claims

1. A hollow tire building drum, <u>characterized in that</u> it is formed of rigid synthetic plastic material, e.g., polyvinyl chloride, high density polyethylene, polypropylene, or nylon, and is provided with a central core (12) adapted to be non-rotatably fixed to the rotating shaft of a conventional tire building machine, said central core (12) being connected to the interior (100) of said hollow drum by a plurality of radially-outwardly-extending-longitudinally-extending ribs (17, 30, 20, 33, 23, 36, 26, & 39).

2. The tire building drum of claim 1, <u>characterized in that</u> said central core (12) is a hollow, square-shaped core, said ribs comprising four ribs, (17, 20, 23 & 26) one extending radially, perpendicularly-outwardly from a respective side wall of the square, and four ribs, (30, 33, 36 & 39) one extending radially, diagonally-outwardly from each corner of the square.

3. The tire building drum of claim 2, <u>characterized in that</u> said radially, perpendicularly-outwardly-extending ribs extend from the centre (18, 21, 24 & 27) of a respective side wall (13, 14, 15 & 16).

4. The tire building drum of claim 3, <u>characterized in that</u> said ribs are connected to said walls (13, 14, 15 & 16) of said core (12) and reinforced areas (18, 29, 21, 32, 24, 35, 27 & 38) and to the interior walls (100) of said hollow drum at reinforced areas (19, 31, 23, 34, 25, 37, 28 & 40).

## Patentansprüche

1. Hohle Reifenaufbautrommel, dadurch gekennzeichnet, daß sie aus einem steifen Kunststoffmaterial, beispielsweise Polyvinylchlorid, Polyethylen hoher Dichte, Polypropylen oder Nylon besteht, und mit einem Mittelkern (12) versehen ist, welcher so angepaßt ist, daß er nicht drehbar auf der rotierenden Welle einer herkömmlichen Reifenaufbaumaschine befestigt ist, wobei der Mittelkern (12) mit der Innenwand (100) der Reifenaufbautrommel durch eine Vielzahl von radial auswärts gerichteten und sich longitudinal erstreckenden Stegen (17, 30, 20, 33, 23, 36, 26, 39) verbunden ist.

2. Hohle Reifenaufbautrommel nach Anspruch 1, dadurch gekennzeichnet, daß der Mittelkern (12) ein hohler, quadratisch geformter Kern ist und die Stege vier Stege (17, 20, 23, 26) umfassen, von denen jeweils einer radial gerichtet von der entsprechenden Seitenwand des Quadrates sich senkrecht nach außen weisend erstreckt, und vier Stege (30, 33, 36, 39), von denen jeweils einer radial gerichtet von der entsprechenden Ecke des Quadrates sich diagonal nach außen weisend erstreckt.

3. Hohle Reifenaufbautrommel nach Anspruch 2, dadurch gekennzeichnet, daß die radial gerichteten, senkrecht nach außen weisenden Stege von der Mitte (18, 21, 24, 27) der entsprechenden Seitenwände (13, 14, 15, 16) ausgehen.

4. Hohle Reifenaufbautrommel nach Anspruch 3, dadurch gekennzeichnet, daß die Stege mit den Seitenwänden (13, 14, 15, 16) des Mittelkernes (12) an verstärkten Bereichen (18, 29, 21, 32, 24, 35, 27, 38) und der Innenwand (100) der hohlen Reifenaufbautrommel an den verstärkten Bereichen (19, 31, 22, 34, 25, 37, 28, 40) verbunden sind.

## Revendications

1. Tambour creux de confection de pneus, caractérisé en ce qu'il est réalisé en une matière plastique synthétique rigide, par exemple en chlorure de polyvinyle, en polyéthylène de haute densité, en polypropylène ou en "Nylon", et en ce qu'il est pourvu d'un moyeu central (12) adapté pour être fixé de façon non-rotative sur l'arbre tournant d'une machine conventionnelle de confection de pneus, ledit moyeu central (12) étant relié à l'intérieur (100) du dit tambour creux par une série de nervures (17, 30, 20, 33, 23, 36, 26 & 39) s'étendant radialement vers l'extérieur et s'étendant dans le sens longitudinal.

2. Tambour de confection de pneus selon la revendication 1, caractérisé en ce que ledit moyeu central (12) est un moyeu creux carré, lesdites nervures comprenant quatre nervures (17, 20, 23 & 26) s'étendant radialement vers l'extérieur, perpendiculairement à partir d'une paroi latérale correspondante du carré, et quatre nervures (30, 33, 36 & 39) s'étendant radialement vers l'extérieur, diagonalement à partir de chaque coin du carré.

3. Tambour de confection de pneus selon la revendication 2, caractérisé en ce que lesdites nervures s'étendant radialement et perpendiculairement vers l'extérieur s'étendent depuis le centre (18, 21, 24 & 27) d'une paroi latérale correspondante (13, 14, 15 & 16).

4. Tambour de confection de pneus selon la revendication 3, caractérisé en ce que lesdites nervures sont reliées aux parois latérales (13, 14, 15 & 16) dudit moyeu (12) au niveau de zones renforcées (18, 29, 21, 32, 24, 35, 27 & 38), et à la paroi intérieure (100) du dit tambour creux au niveau de zones renforcées (19, 31, 23, 34, 25, 37, 28 & 40).

FIG. 1

FIG. 2

FIG. 3